# EUROPEAN PATENT APPLICATION

(11) **EP 1 626 110 A2**
(43) Date of publication of application: **15.02.2006**
(21) Application number: 05254401.2
(22) Date of filing: 14.07.2005
(51) Int. Cl.: C25C 7/00, C25C 5/02

(54) **Metallic particle and method of producing the same**

(30) Priority: 30.07.2004 JP 2004224401
(71) Applicant: Shinano Kenshi Kabushiki Kaisha, Nagano 386-0498 (JP)
(72) Inventor: Ichiki, Kouichi, Shinano Kenshi K.K., Chiisagata-gun, Nagano 386-0498 (JP); Furukawa, Akihide, Shinano Kenshi K.K., Chiisagata-gun, Nagano 386-0498 (JP)
(74) Representative: Calderbank, Thomas Roger

(57) **Abstract**

The method of producing metallic particles is capable of dispersing fine carbon fibers in an electrolytic solution without using a dispersing agent. The method of producing metallic particles comprises the steps of: electrolyzing an electrolytic solution (X), in which fine carbon fibers have been dispersed, so as to deposit metallic particles including the fine carbon fibers on a cathode (22); and separating the deposited metallic particles from the cathode (22). Vibrations or shocks are applied to the electrolytic solution (X).

## Description

The present invention relates to metallic particles suitable for powder metallurgical materials, electric contact points, electromagnetic interference shield materials, electric conductive materials, contact points of frictional members, slide members, etc. and a method of producing the metallic particles.

Composite materials, in which fine carbon fibers, e.g., carbon nano tubes, carbon nano fibers, are dispersed, are known.

A block-shaped composite material disclosed in Japanese Patent Gazette No. 2000-223004 is formed by mixing fine carbon fibers with metal powders and sintering the mixture.

Diameters of fine carbon fibers are extremely small or 5-300 nm. On the other hand, diameters of ordinary metal powders are 1-several hundred micrometer. Namely, diameters of metal powders are 10 times or more greater than those of fine carbon fibers. They cannot be uniformly mixed by merely mixing them.

Thus, the conventional composite material is produced by the steps of: melting metal powders, e.g., copper powders, in an acid solution, e.g., hydrochloric acid, sulfuric acid, nitric acid; dispersing fine carbon fibers in the solution; drying the mixture; and sintering the dried mixture.

The above described conventional method has following disadvantages: the steps of melting the metal powders, drying the mixture and sintering the mixture are very troublesome; it takes a long time; production costs must be high; and it is very difficult to uniformly disperse a large amount of the fine carbon fibers for mass-producing the composite materials.

To solve the disadvantages, the inventors of the present invention have filed a patent application (application number: JP 2003-40308), wherein metallic particles including fine carbon fibers are deposited on_a cathode by electrolyzing an electrolytic solution, in which the fine carbon fibers are dispersed.

However, a dispersing agent of an organic compound, e.g., polyacrylic acid, must be added to the electrolytic solution, so there is a possibility of incorporating minute amount of the dispersing agent into the metallic particles including the fine carbon fibers.

If the dispersing agent is incorporated into the metallic particles, electric conductivity and heat conductivity of the metallic particles will be lowered.

Further, suitable dispersing agent depend on kinds of electrolytic solutions and types of fine carbon fibers, so experiments must be repeated to find a suitable dispersing agent for each electrolytic solution. Namely, it is troublesome to find a suitable dispersing agent for each electrolytic solution.

The present invention has been invented to solve the problems of the conventional technology. An object of the present invention is to provide a method of producing metallic particles, which is capable of dispersing fine carbon fibers in an electrolytic solution without using a dispersing agent, and metallic particles produced by said method.

To achieve the object, the present invention has following methods.

Namely, the method of producing metallic particles comprises the steps of: electrolyzing an electrolytic solution, in which fine carbon fibers have been dispersed, so as to deposit metallic particles including the fine carbon fibers on a cathode; and separating the deposited metallic particles from the cathode, and vibrations or shocks are applied to the electrolytic solution.

With this method, the fine carbon fibers can be dispersed in the electrolytic solution by the vibrations or shocks, so that the metallic particles including the fine carbon fibers, which have high electric conductivity and heat conductivity, can be produced without using a dispersing agent.

In the method, the vibrations or shocks may be always or temporarily applied in said electrolyzing step. In this case, they may be applied at specified time intervals.

In the method, the vibrations or shocks may crush the metallic particles, which have been liberated into the electrolytic solution from the cathode. With this method, even if the metallic particles, which have once deposited on the cathode, are liberate into the electrolytic solution from the cathode, the liberated metallic particles are crushed, so that clumping metal powders and the fine carbon fibers can be prevented.

In the method, the vibrations or shocks may be generated by supersonic waves.

In the method, the electrolytic solution may be agitated. With this method, the electrolytic solution is agitated as well as the conventional method, concentration and temperature of the electrolytic solution can be equalized by applying the vibrations or shocks and agitating the electrolytic solution.

The metallic particles of the present invention are produced by the above described method.

Further, a composite material may be produced by melting or sintering an aggregate of the metallic particles of the present invention. Examples of the composite material are an aggregate of the metallic particles, a mixture of the metallic particles and polymers or ceramics, etc.. The aggregate or the mixture includes a complex formed by melting, sintering or adding metal or polymer binders.

By employing the method of the present invention, the fine carbon fibers can be dispersed in the electrolytic solution without using a dispersing agent. Therefore, no dispersing agent is incorporated into the metallic particles, so that high performance metallic particles can be produced. Since no dispersing agent is used, pollution generated by decomposition of the dispersing agent can be prevented. Further, the metallic particles of the present invention include no dispersing agent, so that electric conductivity and heat conductivity of the metallic particles can be improved.

Embodiments of the present invention will now be described by way of examples and with reference to the accompanying drawings, in which:
Fig. 1 is an explanation view of an apparatus for producing metallic particles by the method of the present invention;
Fig. 2 is a scanning electron micrograph of metallic particles of Experiment 1, which deposit on a cathode;
Fig. 3 is a scanning electron micrograph of metallic particles of Experiment 2, which deposit on the cathode;
Fig. 4 is a scanning electron micrograph of metallic particles of Experiment 3, which deposit on the cathode;
Fig. 5 is an enlarged view of Fig. 4;
Fig. 6 is a scanning electron micrograph of metallic particles of Experiment 4, which deposit on the cathode; and

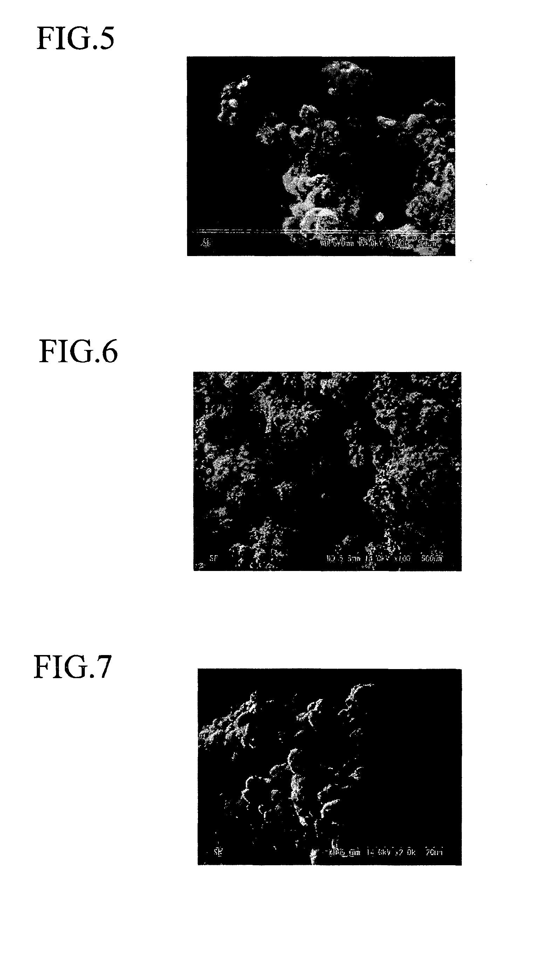

Fig. 5 is an enlarged view of Fig. 6.

Preferred embodiments of the present invention will now be described in detail with reference to the accompanying drawings.

In the method of producing metallic particles relating to the present invention, an electrolytic solution, in which fine carbon fibers, e.g., carbon nano tubes (CNTs), carbon nano fibers (CNFs), have been dispersed, is electrolyzed so as to deposit metallic particles including the fine carbon fibers on a cathode, and the deposited metallic particles are separated from the cathode. Especially, vibrations or shocks are applied to the electrolytic solution so as to disperse the fine carbon fibers in the electrolytic solution while the metallic particles deposit.

If the metallic particles, which have deposited on the cathode, are liberate into the electrolytic solution from the cathode, the vibrations or shocks for dispersing the fine carbon fibers crush the metallic particles liberated, so that clumping the metallic particles and the fine carbon fibers in the electrolytic solution can be prevented.

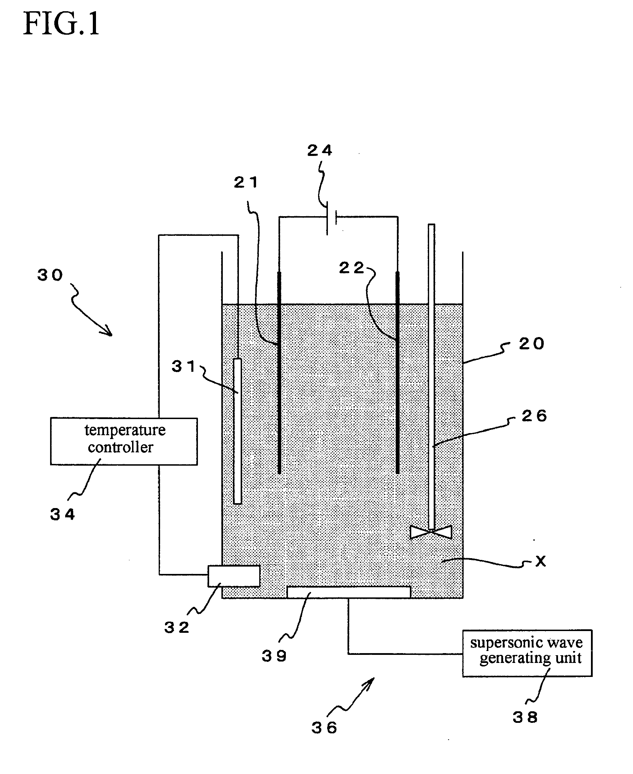

An apparatus for producing the metallic particles, which can perform the method of the present invention, is shown in Fig. 1.

In Fig. 1, an electrolytic solution X is stored in an electrolytic bath 20 having an anode 21 and a cathode 22. The electrodes 21 and 22 are connected to a DC electric source 24 so as to apply prescribed DC voltage between the electrodes 21 and 22.

An agitator 26 is provided to the electrolytic bath 20 so as to agitate the electrolytic solution X.

Means 30 for adjusting temperature of the electrolytic solution X is provided to the electrolytic bath 20. The adjusting means 30 includes: a thermocouple 31 acting as a temperature sensor; a unit 30 for heating and cooling the electrolytic solution X; and a temperature controller controlling the unit 30 on the basis of the temperature of the electrolytic solution X measured by the thermocouple 31.

A vibration generator 36 for applying vibrations to the electrolytic solution X in the electrolytic bath 20 is provided to the electrolytic bath 20. For example, the vibration generator 36 is a supersonic vibration generator. The supersonic vibration generator 36 includes a supersonic wave generating unit 38 and a vibrator 39. The vibrator 39 is vibrated by supersonic waves generated by the supersonic wave generating unit 38, so that the vibrator 39 applies vibrations to the electrolytic solution X in the electrolytic bath 20. Further, the supersonic waves crush metallic particles, which have been liberated into the electrolytic solution X from the cathode 22, so as not to clump the metallic particles and the fine carbon fibers in the electrolytic solution X.

By adjusting electrolyzing conditions of the apparatus, e.g., electric current density, electrolyzing time, metallic particles, whose average diameters are several hundred nm to dozens micrometer, can be deposited. The electric current density is determined according to desired particle diameters and production efficiency.

For example, to prepare a copper electrolytic solution, the electrolytic solution X, whose main components are copper sulfate and sulfuric acid, is stored in the electrolytic bath 20, then CNTs or CNFs are added to the copper electrolytic solution X.

The anode 21 is made of electrolytic copper so as to supply copper ions to the electrolytic solution X. Note that, the anode 21 may be made of other metals, e.g., lead, and copper ions may be supplied from the outside.

In some cases, the electrolytic solution X is agitated by the agitator 26, and concentration of the solution X and a ratio of the components are controlled.

The vibrations may be always or temporarily applied to the electrolytic solution X in the electrolyzing step. Further, the vibrations may be applied at specified time intervals.

The metallic particles deposited may be mechanically separated from the cathode 22 by a blade, etc..

Particle diameters and toughness of the metallic particles and easiness of separating from the cathode 22 may be adjusted by adding organic or inorganic compounds, e.g., thiourea, gelatin, tungsten, chlorides, to the electrolytic solution X.

Preferably, the cathode 22 is made of titanium, which is easily separated from the metallic particles deposited thereon. Further, a surface of the cathode 22 may be rough so as to easily form the deposited metal into particles. For example, fine projections of niobium, tantalum or platinum may be formed on the surface of the titanium cathode 22.

Particle diameters of the metallic particles including CNTs or CNFs are determined by sizes and shapes of the fine projections on the surface of the cathode 22, electric current density for electrolyzing the solution X and a cycle of applying vibrations or shocks to the cathode 22.

Note that, the metallic component of the metallic particles is not limited to copper.

Various composite materials can be made by melting aggregates of the metallic particles. In this case, various additives may be added to the metallic particles.

For example, the metallic particles including the fine carbon fibers and metallic particles including no fine carbon fibers may be mixed with a proper mixture ratio so as to produce a composite material including a desired amount of the fine carbon fibers.

Further, the metallic particles may be mixed with resin, etc..

The composite materials may be produced by resin molding, sintering, metal injection molding, etc..

Particle diameters of the metallic particles are several hundred nm to dozens micrometer, further the fine carbon fibers are incorporated between the metallic particles. Therefore, the fine carbon fibers can be uniformly mixed in a composite material, which is produced by melting the aggregates of the metallic particles.

By varying an amount of the fine carbon fibers dispersed in the electrolytic solution X and the electrolyzing conditions, various types of metallic particles, which include different amounts of fine carbon fibers and have different particle diameters, can be produced. Therefore, the amount of fine carbon fibers included in the composite material, which is produced by melting the aggregates of the metallic particles, can be optionally controlled.

Since CNTs and CNFs have high slidability, high electric conductivity and high heat conductivity, the composite material may be used as materials of slide bearings, electrodes, electric contact points, heat sinks, etc..

Experiments will be explained. Note that, vibration strengths applied to the electrolytic solution of Experiments 1 and 3 were medium; that of Experiment 2 was slightly low; and that of Experiment 4 was high. The vibration strengths of the supersonic waves were relative strengths between the experiments.

### (Experiment 1)

**Electrolytic solution**

| | |
|---|---|
| CuSO₄ • 5H₂O: | 160 g/L |
| H₂ SO₄ : | 100 g/L |
| CNT: | 1 g/L |
| Strength of supersonic waves: | medium |

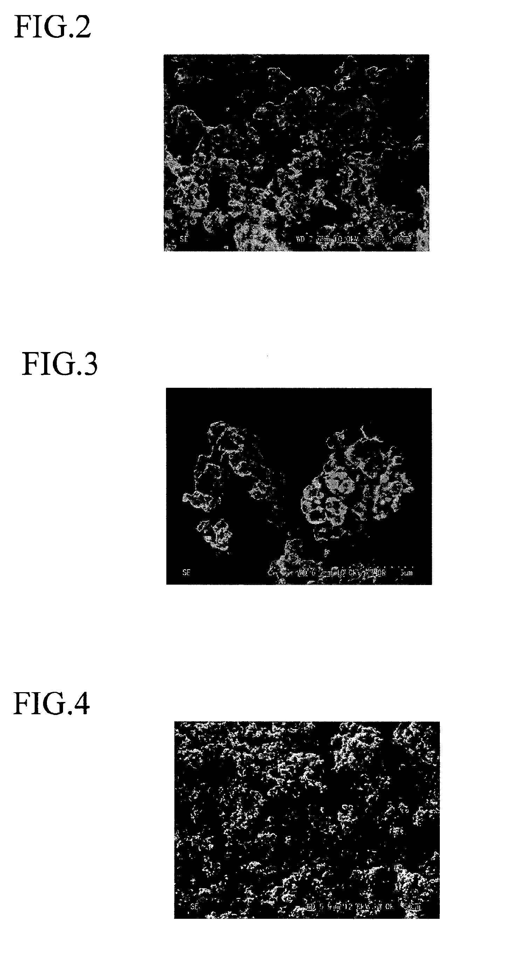

The electrolytic solution was electrolyzed for 15 minutes with solution temperature of 25 °C and current density of 40 A/dm². The electrolytic solution was agitated, and supersonic waves, whose strength was medium, were applied to the electrolytic solution by the vibration generator. A scanning electron micrograph of a film deposited on the surface of the cathode is shown in Fig. 2.

As shown in Fig. 2, Cu-CNT composite materials, in which many CNTs were incorporated in fine spherical copper particles having diameters of about 10 micrometer or less, were produced.

The composite materials were mechanically stably separated from the cathode and formed into particles.

### (Experiment 2)

**Electrolytic solution**

| | |
|---|---|
| CuSO₄ • 5H₂O: | 40 g/L |
| H₂ SO₄ : | 100 g/L |
| CNT : | 1 g/L |
| Strength of supersonic waves: | slightly low |

The electrolytic solution was electrolyzed for 15 minutes with solution temperature of 25°C and current density of 40 A/dm². The electrolytic solution was agitated, and supersonic waves, whose strength was slightly low, were applied to the electrolytic solution by the vibration generator. A scanning electron micrograph of a film deposited on the surface of the cathode is shown in Fig. 3.

As shown in Fig. 3, Cu-CNT composite materials, in which many CNTs were incorporated in fine spherical copper particles having diameters of about 10 micrometer, were produced.

The composite materials were mechanically stably separated from the cathode and formed into particles.

### (Experiment 3)

**Electrolytic solution**

| | |
|---|---|
| CuSO₄ • 5H₂O: | 40 g/L |
| H₂ SO₄ : | 100 g/L |
| CNT : | 1 g/L |
| Strength of supersonic waves: | medium |

The electrolytic solution was electrolyzed for 15 minutes with solution temperature of 25°C and current density of 40 A/dm². The electrolytic solution was agitated, and supersonic waves, whose strength was medium, were applied to the electrolytic solution by the vibration generator. Scanning electron micrographs of a film deposited on the surface of the cathode is shown in Figs. 4 and 5. Note that, Fig. 5 is an enlarged view of Fig. 4.

As shown in Fig. 4, spherical Cu-CNT composite materials, which had uniform diameters, were produced. Further, as shown in Fig. 5, many CNTs were incorporated in fine spherical copper particles, whose diameters were about 10-30 micrometer.

The composite materials were mechanically stably separated from the cathode and formed into particles.

### (Experiment 4)

**Electrolytic solution**

| | |
|---|---|
| CuSO₄ • 5H₂O: | 40 g/L |
| H₂ SO₄ : | 100 g/L |
| CNT : | 1 g/L |
| Strength of supersonic waves: | high |

The electrolytic solution was electrolyzed for 15 minutes with solution temperature of 25°C and current density of 40 A/dm². The electrolytic solution was agitated, and supersonic waves, whose strength was high, were applied to the electrolytic solution by the vibration generator. Scanning electron micrographs of a film deposited on the surface of the cathode is shown in Figs. 6 and 7. Note that, the micrograph of Fig. 7 was 25 times enlarged that of Fig. 6.

It is not clear in Fig. 6, but, as shown in Fig. 7, spherical Cu-CNT composite materials, , in which many CNTs were incorporated in fine spherical copper particles having diameters of about 20-40 micrometer, were produced. Unlike the Experiments 1-3, the composite materials were not isolated. By applying strong supersonic waves, the Cu-CNT composite materials were formed into block-shapes or plate-shapes, so it was difficult to separate the composite materials from the cathode. Namely, forming the composite materials into particles was difficult.

As described above, by applying the supersonic waves of proper strength to the electrolytic solution, the fine carbon fibers could be well dispersed in the electrolytic solution without using a dispersing agent, so that the metallic particles including the fine carbon fibers could be produced.

Note that, if the strength of the supersonic waves is lower than that of the Experiment 2, the fine carbon fibers will not be dispersed well in the solution, so that metallic particles cannot fully incorporate the fine carbon fibers.

On the other hand, if the strength of the supersonic waves is too high as well as that of the Experiment 4, the metallic particles including the fine carbon fibers will form into bad shapes, e.g., block-shapes, plate-shapes.

Note that, in the above described embodiment, vibrations are applied to the electrolytic solution, but shocks may be applied instead of vibrations.

The vibrations or shocks may be applied by supersonic waves, but they may be applied by other means.

The invention may be embodied in other specific forms without departing from the spirit of essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A method of producing metallic particles comprising the steps of: electrolyzing an electrolytic solution (X), in which fine carbon fibers have been dispersed, so as to deposit metallic particles including the fine carbon fibers on a cathode (22); and separating the deposited metallic particles from the cathode (22), **characterized in,**
**that** vibrations or shocks are applied to the electrolytic solution (X).

2. The method according to claim 1,
wherein the vibrations or shocks are always or temporarily applied in said electrolyzing step.

3. The method according to claim 1 or 2,
wherein the vibrations or shocks crush the metallic particles, which have been liberated into the electrolytic solution from the cathode.

4. The method according to claim 1, 2 or 3,
wherein the vibrations or shocks are generated by supersonic waves.

5. The method according to claim 1, 2, 3 or 4,
wherein the electrolytic solution is agitated.

6. Metallic particles produced by said method according to one of claims 1-5.

7. A composite material produced by melting or sintering an aggregate of said metallic particles according to claim 6.
